# EUROPÄISCHE PATENTSCHRIFT

(11) **EP 0 751 327 B1**
(45) Veröffentlichungstag und Bekanntmachung des Hinweises auf die Patenterteilung: **17.01.2001**
(21) Anmeldenummer: 96110326.4
(22) Anmeldetag: 26.06.1996
(51) Int. Cl.: F16L 3/233

(54) **Befestigungselement zum Anbringen langgestreckter Gegenstände an einer Wand**
Fastening element for mounting elongated articles on a wall
Elément de fixation d'articles allongés sur une paroi

(30) Priorität: 29.06.1995 DE 29510606 U
(43) Veröffentlichungstag der Anmeldung: 02.01.1997
(73) Patentinhaber: Hellermann Tyton GmbH, 25436 Tornesch (DE)
(72) Erfinder: Matschiner, Bernd, Dr.-Ing., 25495 Kummerfeld (DE); Wöltje, Jürgen, 28211 Bremen (DE)
(74) Vertreter: Glawe, Delfs, Moll & Partner

(56) Entgegenhaltungen:
- EP-A- 0 602 548
- DE-A- 3 544 683
- DE-U- 9 317 983
- FR-A- 2 298 717

## Beschreibung

Es ist bekannt (DE 93 17 983 U), mit einer Befestigungsschelle aus Kunststoff, die zum Halten beispielsweise von Kabelbäumen dient, einstückig einen Verankerungsteil zu verbinden, der zum Anbringen der Befestigungsschelle und damit des Kabelbaums an einem Wandteil dient. Der Verankerungsteil ist beispielsweise mit irgendwelchen Spreizgliedem ausgerüstet, mit denen er sich in oder hinter einer Bohrung des Wandteils verankert. Aus der Verankerungsstellung kann er zerstörungsfrei nur dadurch gelöst werden, daß die die Verankerung bewirkenden Teile von der Rückseite des Wandteils her gelöst werden. Häufig ist aber der Raum hinter dem Wandteil nicht zugänglich. Muß das Befestigungselement entfernt werden, um beispielsweise nach Beschädigung einem neuen Befestigungselement Platz zu machen, muß es zerstört werden. Der Verankerungsteil fällt dann in den Raum hinter der Wand und kann dort stören, beispielsweise andere Funktionsteile beeinträchtigen oder Klappergeräusche hervorrufen.

Diesen Nachteil kann man dadurch vermeiden, daß man auf die einstückige Verbindung von Verankerungsteil und Befestigungsschelle verzichtet (FR-A 2 298 717, EP-A 602 548). Der Befestigungsteil wird dann mit einer Öse versehen, mit der eine beliebig ersetzbare Befestigungsschelle verbunden werden kann. Jedoch hat diese Lösung den Nachteil, daß sie wegen der Notwendigkeit der Bereitstellung zweier gesonderter Teile aufwendiger in der Herstellung und Lagerung ist und daß sie bei der Erstverwendung größeren Montageaufwand verlangt. Die seltenen Fälle, in denen die Befestigungsschelle erneuert werden muß, rechtfertigen diesen Aufwand nicht.

Die Erfindung geht deshalb von denjenigen bekannten Befestigungsschellen aus, die einstückig mit einem Verankerungsteil verbunden sind, und will vermeiden, daß der Verankerungsteil beim Ersatz der Befestigungsschelle in den Raum hinter der Wand fällt.

Die erfindungsgemäße Lösung besteht darin, daß an dem Verankerungsteil zusätzlich zu der Befestigungsschelle eine Öse zum Durchführen eines Schellenbands angeordnet ist. Diese Öse kann zwischen dem Verankerungsteil und der Befestigungsschelle angeordnet sein.

Muß das Schellenband ersetzt werden, so schneidet man einfach das alte Schellenband unter Belassung der Öse ab und befestigt das neue Schellenband, an welchem dann kein besonderer Verankerungsteil erforderlich ist, an der Öse.

Es ist ein Kabelhalter bekannt (DE-A 35 44 683), der aus einem Verankerungsteil und einem Befestigungsbügel besteht, die einstückig miteinander verbunden sind. An der Verbindungsstelle zwischen Befestigungsbügel und Verankerungsteil ist eine quer verlaufende Öffnung vorgesehen, für die eine Erläuterung fehlt. Es ist anzunehmen, daß sie herstellungstechnische Gründe hat, nämlich vermeiden soll, daß an der Verbindungsstelle eine übermäßige, zu Abkühlungsschwierigkeiten bei der spritztechnischen Herstellung führende Materialanhäufung stattfindet. Für die Anbringung einer Befestigungsschelle anstelle des Bügels ist sie weder sinnvoll noch geeignet. Der Bügel ist nämlich so ausgeführt, daß er beliebig geöffnet und erneut geschlossen werden kann, so daß die Notwendigkeit eines Ersatzes nicht auftritt. Sollte der unwahrscheinliche Fall eintreten, daß ein Teil des Bügels abbricht, so ist die Öffnung nicht dazu geeignet, einen Ersatz durch eine Befestigungsschelle anzubieten, weil sie nicht quer, sondern parallel zu der durch den verbleibenden Teil der Klammer festgelegten Kabelbaumrichtung verläuft.

Der Begriff Wandteil dient im Zusammenhang der Erfindung lediglich zur Bezeichnung eines Bauteils, das eine Befestigungsöffnung für den Verankerungsteil enthält und hinter welchem ein nicht oder schwer zugänglicher Raum vorhanden ist. Es kann sich beispielsweise um die Wand eines Hohlprofils handeln. Es ist nicht erforderlich, daß er darüber hinausgehende Raumteilerfunktionen besitzt.

Unter einer Befestigungsschelle ist im Sinne der Erfindung jedes beliebige Mittel zum Festhalten eines oder mehrerer langgestreckter Gegenstände zu verstehen. Sie ist üblicherweise bandförmig oder bügelförmig ausgebildet. Sie sollte ohne größere Schwierigkeiten von dem Verankerungsteil bzw. von der Öse trennbar sein, wenn ihr Verbleib im Falle des Ersatzes durch ein neues Schellenband stört.

Unter einer Öse ist ein Teil zu verstehen, der eine Halte- oder Durchfädelöffnung für ein Schellenband bildet. Die Öse kann ganz oder teilweise von ohnehin vorhandenen Teilen des Verankerungsteils oder der Befestigungsschelle gebildet sein. Beispielsweise kann sie von einer Öffnung im Verankerungsteil oder in einem dem Verankerungsteil nahen Bereich der Befestigungsschelle gebildet sein.

Die Erfindung wird im folgenden näher unter Bezugnahme auf die Zeichnung erläutert, die ein bevorzugtes Ausführungsbeispiel veranschaulicht. Darin zeigen:
- Fig. 1: eine Seitenansicht
- Fig. 2: eine Draufsicht auf das Befestigungselement und
- Fig. 3: eine Seitenansicht quer zur Projektionsrichtung der Fig. 1 in Verbindung mit einem neuen Kabelband.

Die Befestigungsschelle wird von einer flexiblen, gezahnten Bandzunge 1 und einem Befestigungskopf 2 gebildet, in welchem das freie Ende der Bandzunge in beliebiger Längeneinstellung verankerbar ist.

Einstückig mit der Befestigungsschelle 1, 2 ist aus demselben Material, vorzugsweise zähelastischem Kunststoff wie Polyamid, der Verankerungsteil 3 geformt, der aus einem Schaft 4, Spreizarmen 5 und einem Federteller 6 besteht. Der Verankerungsteil kann in einer passenden Verankerungsbohrung eines Wandteils verankert werden, indem der Schaft 4 mit den Spreizarmen 5 durch die Verankerungsbohrung gesteckt wird, bis die Spreizarme 5 sich hinter der Verankerungsbohrung frei spreizen können und dadurch eine Rückbewegung des Verankerungsteils unmöglich machen.

Erfindungsgemäß ist zwischen dem Verankerungsteil 3 und der Befestigungsschelle 1, 2 eine Öse mit einem Durchbruch 7 angeordnet, dessen Querschnittsabmessungen mindestens den Querschnittsabmessungen 8 der Bandzunge 1 entsprechen, so daß eine entsprechende Befestigungsschelle (vorzugsweise eine solche ohne Verankerungsteil 3) hindurchgesteckt werden kann. Der Durchbruch 7 ist dadurch gebildet, daß die Bandzunge 1 nicht unmittelbar sondern über zwei Stege 9 mit dem Verankerungsteil 3 verbunden wird, so daß der Durchbruch 7 einerseits vom Verankerungsteil 3, andererseits von der Bandzunge 1 oder diese in diesem Bereich ersetzenden Stegen 10 sowie beidseitig von den Stegen 9 begrenzt wird.

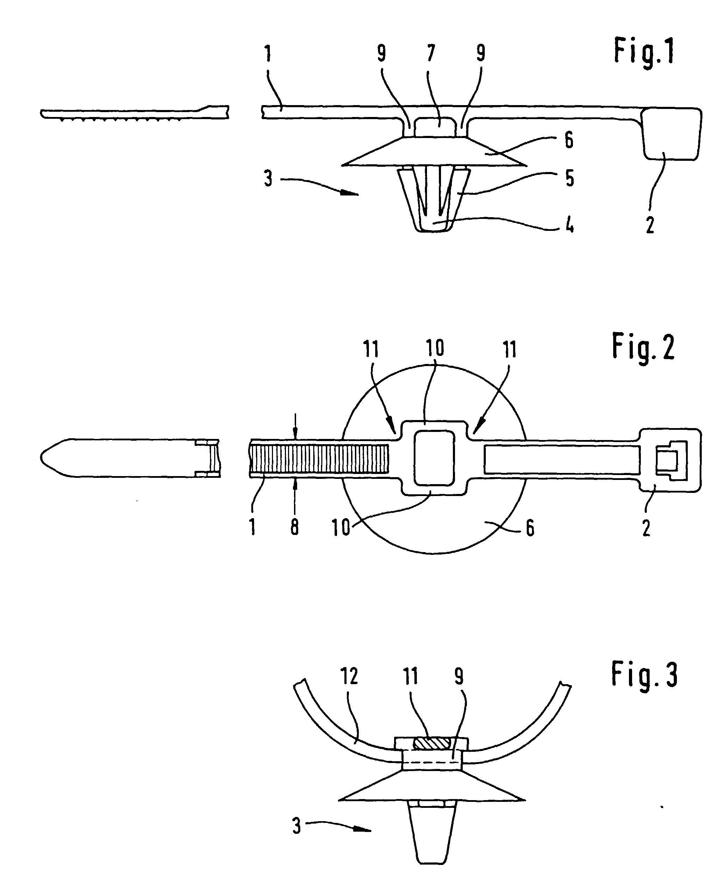

Erweist es sich als erforderlich, das bis hierher erläuterte Befestigungselement bzw. die Befestigungsschelle zu ersetzen, so wird diese beispielsweise an den Stellen 11, die in Fig. 2 mit Pfeilen und in Fig. 3 schraffiert angedeutet sind, abgeschnitten. Eine neue Befestigungsschelle wird durch den Durchbruch 7 gezogen und dient nun in Verbindung mit dem alten Verankerungsteil 3 zur Befestigung.

Das erfindungsgemäße Befestigungselement kann auch in solchen Fällen mit Vorteil verwendet werden, in denen ein zu befestigender Gegenstand zusätzlich zu der Befestigungsschelle 1, 2 durch ein quer dazu verlaufendes Band 12 befestigt werden soll.

## Patentansprüche

1. Befestigungselement zum Anbringen langgestreckter Gegenstände an einem Wandteil mit einer Befestigungsschelle (1, 2) und einem damit einstückig verbundenen, zur Verbindung mit der Wand bestimmten Verankerungsteil (3), dadurch gekennzeichnet, daß an dem Verankerungsteil (3) zusätzlich zu der Befestigungsschelle (1, 2) eine Öse (7) zum Durchführen eines Schellenbandes angeordnet ist.

2. Befestigungselement nach Anspruch 1, dadurch gekennzeichnet, daß die Öse (7) zwischen dem Verankerungsteil (3) und der Befestigungsschelle (1, 2) angeordnet ist.

## Claims

1. A fastening element for applying elongate articles to a wall member, having a fastening clip (1,2) and an anchoring part (3) connected integrally therewith and intended for connection with the wall, characterised in that an eyelet (7) for the passage of a clip strap is arranged on the anchoring part (3) additionally to the fastening clip (1,2).

2. A fastening element according to Claim 1,
characterised in that the eyelet (7) is disposed between the anchoring part (3) and the fastening clip (1,2).

## Revendications

1. Elément de fixation pour le montage d'objets allongés sur une partie de paroi, comportant un collier de fixation (1, 2) et un élément d'ancrage (3), relié d'une seule pièce à ce collier et destiné à assurer la liaison avec la paroi, caractérisé en ce qu'il est prévu sur l'élément d'ancrage, en plus du collier de fixation (1, 2), un oeillet (7) pour le passage d'une bande de collier.

2. Elément de fixation selon la revendication 1, caractérisé en ce que l'oeillet (7) est disposé entre l'élément d'ancrage (3) et le collier de fixation (1, 2).
